# EUROPÄISCHE PATENTSCHRIFT

(11) **EP 0 396 682 B1**
(45) Veröffentlichungstag und Bekanntmachung des Hinweises auf die Patenterteilung: **10.11.1993**
(21) Anmeldenummer: 89911532.3
(22) Anmeldetag: 21.10.1989
(51) Int. Cl.: H02J 13/00, H04B 14/02

(54) **VERFAHREN ZUM BEEINFLUSSEN DER BELASTUNG EINES VERSORGUNGSSPANNUNGSNETZES**
A PROCESS FOR VARYING THE LOAD ON A POWER SUPPLY SYSTEM
PROCEDE PERMETTANT D'AGIR SUR LA CHARGE D'UN RESEAU D'ALIMENTATION ELECTRIQUE

(30) Priorität: 22.10.1988 DE 3836114; 18.11.1988 DE 8814411 U
(43) Veröffentlichungstag der Anmeldung: 14.11.1990
(73) Patentinhaber: TÖNNIES, Jan Gerrit, D-24105 Kiel (DE)
(72) Erfinder: TÖNNIES, Jan, Gerrit, D-2300 Kiel 1 (DE)
(86) Internationale Anmeldenummer: DE8900671
(87) Internationale Veröffentlichungsnummer: WO9004873

(56) Entgegenhaltungen:
- EP-A- 0 091 290
- EP-A- 0 110 481
- EP-A- 0 212 247
- GB-A- 1 409 490
- Ebbinghaus, K. u. a.: Stromverbrauchs-Messtechnik und Tarifstruktur-Möglichkeiten der Mikroelektronik, in: Brennstoff-Wärme-Kraft, 1981, S. 303-312

## Beschreibung

Die Erfindung betrifft ein Verfahren zum Beeinflussen der zeitlichen Belastung eines Versorgungsspannungsnetzes unter Verwendung eines Rundsteuersignalgebers sowie einen Stromzähler, ein Anzeigegerät und ein Schaltgerät für ein solches Verfahren.

Die Gestehungskosten elektrischer Energie schwankt erheblich: Während elektrische Energie für die Grundlast relativ kostengünstig hergestellt werden kann, sind die Gestehungskosten für die Energie, die zu Spitzenzeiten dem Versorgungsnetz entnommen wird, sehr hoch. Der Stromabnehmer (jedenfalls der Privataushalt) zahlt jedoch im allgemeinen einen Strompreis, der unabhängig davon ist, ob "wertvoller" Strom zu Zeiten des Spitzenbedarfes oder aber "billiger" Strom zu Zeiten eines geringen Bedarfes verbraucht wird.

Um dem entgegenzuwirken, sind bereits Zweitarifzähler bekannt, die durch ein von dem Elektrizitätversorgungsunternehmen (EVU) dem Versorgungsnetz aufgeprägtes Rundsteuertelegramm geschaltet werden, so daß nachts dem Netz entnommener Strom zu einem günstigeren Preis berechnet wird. Bekannt sind weiter Überverbrauchszähler und Maximumzähler. Auch derartige Zähler können das Problem jedoch nicht befriedigend lösen. Es ist weiter der Vorschlag diskutiert worden, über Rundsteuersignalgeber lastabhängig jeweils eine von mehreren in den Stromzählern eingespeicherte Tarifstufen durch Übermittlung eines entsprechend codierten Rundsteuertelegramms anzuwählen (siehe dazu Ebbinghaus, R. u. a.: Stromverbrauchs-Meßtechnik und Tarifstruktur - Möglichkeiten der Mikroelektronik, in: Brennstoff-Wärme-Kraft, 1981, S. 303 - 313). Ein solches Vorgehen aber ist aufwendig und führt insbesondere zu einer Ausbildung einer Lastspitze an dem Zeitpunkt des Beginn einer kostengünstigeren Tarifstufe. Probleme ergeben sich weiter daraus, daß die Anzahl der Rundsteuertelegramme, die pro Zeiteinheit dem Stromnetz aufgeprägt werden können, begrenzt ist.

Aus der EP-A-0091290 ist ein Gerät zur Steuerung der Belastung eines Spannungsversorgungsnetzes durch Ein- und Ausschalten von Verbrauchern mittels Adressierung bestimmter Verbraucher bekannt. Bei unterscheidlichen zu adressierenden "Receivern" variiert dabei der zeitliche Abstand zwischen den Signalbits.

Der Erfindung liegt die Aufgabe zugrunde, ein Verfahren und Geräte für ein solches Verfahren zu schaffen, die auf technisch einfache Weise eine Beeinflussung der Belastung des öffentlichen und/oder des innerbetrieblichen Versorgungsnetzes ermöglichen.

Erfindungsgemäß wird diese Aufgabe gelöst durch die in dem Anspruch 1 bzw. 4, 5 und 9 angegebenen Merkmale. Die Unteransprüche geben vorteilhafte Ausgestaltungen der Erfindung an.

Grundgedanke der Erfindung ist die Erkenntnis, daß - anders als bei jedem anderen Wirtschaftsgut - Angebot und Nachfrage von bzw. nach elektrischer Energie bisher nicht über den Preis in Übereinstimmung gebracht werden. Die in Abhängigkeit von der Auslastung der Kraftwerke erheblich schwankenden Kosten der EVU's werden dem Stromabnehmer bisher nicht oder nur sehr eingeschränkt weitergegeben.

Um eine zeitliche Differenzierung des Strompreises zu ermöglichen, prägt das EVU in den Umspannstationen dem Versorgungsnetz Rundsteuersignale (Impulse einer Frequenz in der Größenordnung von 1000 Hz) auf, wobei der Impulsabstand zur Beeinflussung der Netzbelastung variiert wird. Zu Zeiten, in denen die Belastung des Versorgungsnetzes hoch ist, wird das EVU diese Rundsteuersignale mit geringen Abständen, also großer Häufigkeit, dem Versorgungsnetz aufprägen, zu Zeiten, in denen das Energieangebot den Energiebedarf übersteigt, die Signale mit einem größeren Abstand, also einer geringeren Häufigkeit, aussenden.

Um die zuverlässige Erkennung sicherzustellen, können die Signale als Doppelimpulse ausgebildet sein, beispielsweise als zwei Impulse von je 100 msec Dauer mit einer Unterbrechung von 50 sec.

Der Stromzähler des Stromabnehmers wird durch einen Rechner ergänzt, der nicht (nur) die dem Netz entnommene elektrische Arbeit anzeigt, sondern einen anhand des jeweiligen Signalabstands bewerteten Verbrauch. Dies kann dadurch bewirkt werden, daß bei jedem Erkennen eines dem Versorgungsnetz aufgeprägten Rundsteuersignals durch den Zähler die von dem Abnehmer (Haushalt, Betrieb) dem Versorgungsnetz während des vorangegegangenen Intervalls durchschnittlich entnommene elektrische Leistung aufaddiert wird. Zu Zeiten einer hohen Belastung des Versorgungsnetzes erfolgt also eine Addition mit größerer Häufigkeit als zu Zeiten einer geringen Belastung des Netzes. Erfaßt wird somit nicht der absolute Betrag der dem Netz entnommenen Energie, sondern ein Betrag, der dem zeitlich schwankenden "Wert" der Energie entspricht.

Alternativ kann dies beispielsweise auch dadurch bewirkt werden, daß der Stromzähler die Länge des Abstandes aufeinander folgender Signale mißt und die im nachfolgenden Intervall entnommene elektrische Arbeit mit einem diesem Abstand reziprok entsprechenden Wert multipliziert.

Ein derartiges Verfahren zum Bestimmen der von dem Abnehmer für dem Versorgungsnetz entnommene elektrische Energie zu zahlenden Betrages wird den Abnehmer veranlassen, seinen Stromverbrauch in Zeiten zu legen, in denen die Energie kostengünstig ist, also zu Zeiten geringen Strombedarfs, in denen die Intervalle zwischen den einzelnen Signalen lang ist. Dies gilt insbesondere für die Benutzung von Waschmaschinen, Geschirrspülern, Kühl- und Gefriergeräten und Warmwasserspeichern, bei denen dem Verwender der genaue Zeitpunkt des Arbeitens nicht wichtig ist.

Das Einschalten dieser Verbraucher kann von dem Stromabnehmer durch Vorsehung entsprechender elektrischer, in die Steckdose oder aber den Stromverteiler einzusetzende Zeituhren bewirkt werden.

Es ist jedoch auch möglich, bestimmte Verbraucher elektrischer Energie (Waschmaschine, Geschirrspüler, Warmwasserbereiter, Tiefkühltruhe oder auch Herd) mit einem Schaltgerät zu versehen, das die der Versorgungsspannung aufgeprägten Rundsteuersignale erkennt und den jeweiligen Abstand der Signale voneinander ermittelt. Bei Überschreiten eines vorgegebenen Abstands zwischen den Signalen (also bei einem entsprechend günstigen Stromangebot) wird das entsprechend ausgerüstete Gerät automatisch eingeschaltet. Durch die Bestimmung eines entsprechenden Schwellenwertes kann der Verbraucher somit festlegen, welchen Maximalbetrag er für die benötigte elektrische Arbeit auszugeben bereit ist. Diese den elektrischen Verbraucher vorzuschaltenden Schaltgeräte können weiter mit einer Logik versehen sein, die bei einer Tiefkühltruhe die Versorgung mit elektrischer Energie wenigstens alle 4 Stunden oder bei einer Waschmaschine die bleibende Versorgung bis zum Abschluß des Waschvorgangs bewirkt.

Die hier vorgeschlagene Codierung über den Abstand der Signale (also deren Häufigkeit) ist besonders einfach, zuverlässig und störungs- sowie manipulationssicher: Die Anzahl der von dem Stromzähler erkannten Signale kann erfaßt und auf Abruf im Display dargestellt werden, Manipulationsversuche durch Ausfiltern der Signale können so nachgewiesen werden.

Die moderne Mikroelektronik ermöglicht es, den Rechner, um den der bekannte, die dem Netz entnommene elektrische Arbeit ermittelnde Stromzähler zu ergänzen ist, die Anzeigegeräte und die Schaltgeräte als Massenprodukte äußerst kostengünstig herzustellen.

Bei Anwendung des Verfahrens ist mit einer erheblichen Vergleichmäßigung des dem Versorgungsnetz entnommenen Energie zu rechnen. Die durchschnittlichen Gestehungskosten für elektrische Energie werden dadurch erheblich sinken.

Der zur Durchführung des Verfahrens zur Abrechnung zwischen EVU und Kunden erforderliche Stromzähler ist mit einem (vorzugsweise aktiven) Filter zum Erkennen der der Versorgungsspannung aufgeprägten Signale, die einen Abstand in der Größenordnung von durchschnittlich 1 min haben können, zu versehen. Weiter ist ein Zähler vorzusehen, der den Abstand zwischen den einzelnen Impulsen bestimmt. Schließlich ist die während des Intervalls entnommene elektrische Arbeit mit einem Faktor zu multiplizieren, der sich aus dem Abstand zwischen den Signalen ergibt. Die Summe dieses Produkte wird auf einem Display angezeigt und dient zur Abrechnung mit dem Kunden. Alternativ kann der Rechner jedoch auch bei jedem Erkennen des Signals auf der Versorgungsspannung die durchschnittliche Leistung in dem vorangegangenen Intervall aufsummieren.

Auf dem Display sollten weiter die tatsächlich (also unbewertete) dem Netz entnommene elektrische Arbeit als auch die Anzahl der von dem Gerät erkannten Signale angezeigt werden können.

Das Anzeigegerät, das - beispielsweise in der Küche - in eine Steckdose eingesteckt werden kann, ist mit einem aktiven Filter versehen, das die Signale erkennt. Der Abstand dieser Impulse voneinander wird durch eine geeignete Schaltung ermittelt, in Abhängigkeit von der Länge dieses Abstandes wird eine aus einer Mehrzahl von - vorzugsweise farbigen - Leuchtdioden angesteuert. Für den Stromabnehmer ist der jeweilige Strompreis somit jederzeit unmittelbar erkennbar. Eine besonders einfache Version dieses Anzeigegeräts ist mit lediglich einer roten, einer gelben und einer grünen Leuchtdiode versehen und entspricht somit einer Verkehrsampel. Dabei kann vorgesehen sein, daß die rote Lampe erst dann erlischt, wenn die grüne Leuchtdiode aufleuchtet. Es versteht sich, daß der jeweilige sich aus dem Signalabstand ergebende Strompreis auch digital angezeigt werden kann.

Das Schaltgerät, das in den Stromverteilerkasten oder aber in eine Steckdose eingesetzt werden kann, ist mit einem aktiven Filter versehen, das die Signale erkennt und einen diesem Abstand entsprechenden Wert mit einem von dem Verwender - beispielsweise über ein Potentiometer - eingestellten Wert vergleicht. Ein Relais oder ein Triac werden durchgeschaltet, sobald der dem Abstand der Signale entsprechende Wert den eingestellten Wert unterschreitet. Zeitkreise, deren Laufzeit einstellbar sind, stellen sicher, daß eine Mindesteinschaltzeit und/oder eine Höchsteinschaltdauer gewährleistet sind.

Dabei kann das Schaltgerät mit einem Rechner versehen sein, der eine Bewertung des von ihm geschalteten Gerätes verbrauchten Arbeit anhand der Signalabstände vornimmt.

In Verbindung mit Kühl- oder Gefriergeräten ist es sinnvoll, das Schaltgerät mit einem Thermostaten zu versehen, der die Temperatur in dem Gerät mißt und dafür sorgt, daß das Gerät bei Überschreiten einer bestimmten, höher als die Temperatur des geräteeigenen Thermostaten einzustellenden Temperatur unabhängig von dem jeweiligen Strompreis mit Energie versorgt wird. Entsprechendes gilt für Raumheizgeräte und Warmwasserspeichergeräte.

Die hier vorgeschlagenen Geräte können auch innerhalb eines Betriebes, in dem der Strombezug zur Reduzierung der Kosten vergleichmäßigt werden soll, eingesetzt werden. Bei einer solchen Anwendung ist die von dem Betrieb jeweils dem Netz entnommene elektrische Arbeit zu messen und mit einem einstellbaren gewünschten Maximalwert zu vergleichen. Die Signale werden dann mit einem sich aus diesem Soll/Ist-Vergleich ergebenden Abstand voneinander dem betriebsinternen Netz aufgeprägt, wobei der Abstand der Signale zur Verringerung der Netzbelastung so lange verringert und zur Erhöhung der Netzbelastung so lange erhöht wird, bis die gewünschte Netzbelastung erreicht ist. Die "Rangfolge" der einzelnen elektrischen Geräte, also die Reihenfolge, in der diese bei zunehmender Annäherung an den Maximalwert ausgeschaltet werden, ergibt sich dabei aus der Differenzierung der Einstellung des Vergleichswerts an den elektrischen Geräten vorgeschalteten Schaltgeräten.

## Patentansprüche

1. Verfahren zum Beeinflussen der Belastung eines Versorgungsspannungsnetzes durch Aufprägen von Signalen auf das Netz unter Verwendung eines Rundsteuersignalgebers, bei dem der zeitliche Abstand zwischen den Signalen variiert wird, dadurch gekennzeichnet, daß der zeitliche Abstand zwischen den Signalen zur Verringerung der Netzbelastung verringert und zur Erhöhung der Netzbelastung erhöht wird.

2. Verfahren nach Anspruch 1, dadurch gekennzeichnet, daß die Länge der Signale in der Größenordnung von 100 msec liegt und der durchschnittliche Abstand der Signale voneinander in der Größenordnung von 1 min liegt.

3. Verfahren nach Anspruch 1 oder 2, dadurch gekennzeichnet, daß jedes der Signale ein Doppelimpulszug ist.

4. Stromzähler für das Verfahren nach einem der Ansprüche 1 bis 3, mit Mitteln zum Messen der dem Netz entnommenen elektrischen Arbeit und einem Filter zum Erkennen von dem Stromnetz aufgeprägter Signale, gekennzeichnet durch
- Mittel zum Messen des den jeweiligen Wert der elektrischen Arbeit angebenden Abstandes zwischen den einzelnen Signalen,
- einen Rechner zum Bewerten der dem Netz zwischen aufeinander folgenden Signalen entnommenen elektrischen Arbeit unter Berücksichtigung des jeweiligen Abstandes der Signale voneinander,
- einen Summierer zum Aufsummieren der von dem Rechner bewerteten elektrischen Arbeit, und
- ein Display zum Anzeigen dieser Summe.

5. Anzeigegerät für das Verfahren nach einem der Ansprüche 1 bis 3, mit Mitteln zum Ermitteln und Anzeigen des Abstandes zwischen aufeinander folgenden Signalen, gekennzeichnet durch einen Filter zum Erkennen von dem Stromnetz aufgeprägten Signalen, deren Abstand voneinander dem jeweiligen Wert der elektrischen Arbeit entspricht.

6. Anzeigegerät nach Anspruch 5, dadurch gekennzeichnet, daß die Mittel zum Anzeigen des Abstandes zwischen den einzelnen Signalen farbige Leuchtdioden sind, von denen jeweils mindestens eine in Abhängigkeit von dem Abstand der Siganle aufleuchtet.

7. Anzeigegerät nach Anspruch 6, gekennzeichnet durch eine Ausbildung nach Art einer Verkehrsampel.

8. Anzeigegerät nach einem der Ansprüche 5 bis 7, gekennzeichnet durch Mittel zum Abgeben eines akustischen Signals, sobald der Abstand der Signale voneinander eine einstellbare Dauer unter- oder überschreitet.

9. Schaltgerät für das Verfahren nach einem der vorangehenden Ansprüche, mit Mitteln zum Einschalten eines elektrischen Gerätes, Mitteln zum willkürlichen Einstellen eines Schwellenwerts, Mitteln zum Vergleichen eines Signalwerts mit dem Schwellenwert und Mitteln, die das elektrische Gerät einschalten, wenn der Signalwert den Schwellenwert unterschreitet und das elektrische Gerät abschalten, wenn der Signalwert den Schwellenwert überschreitet, gekennzeichnet durch
- einen Filter zum Erkennen von dem Stromnetz aufgeprägten Signalen, deren Abstand voneinander dem jeweiligen Wert der elektrischen Arbeit entspricht, und
- Mittel zum Bilden des Signalwerts aus dem jeweiligen Abstand der dem Netz aufgeprägten Signale voneinander.

10. Schaltgerät nach Anspruch 9, gekennzeichnet durch Mittel, die eine wählbare Mindesteinschaltdauer und/oder eine wählbare Höchstausschaltdauer gewährleisten.

11. Schaltgerät nach Anspruch 9 oder 10 zum Schalten von Kühl- und Gefriergeräten oder Wasser- und Raumheizgeräten, gekennzeichnet durch einen Thermostaten, der bei Über- bzw. Unterschreiten einer vorgegebenen Temperatur unabhängig von dem jeweiligen Abstand der Signale das jeweilige Kühl- bzw. Heizgerät einschaltet.

## Claims

1. A process for varying the load on a power system by impressing signals on the line using a ripple control system in which the interval between signals is variated, characterized in that the interval between the signals is shortened to reduce the load and is lenghtened to increase the load.

2. A process according to claim 1, characterized in that the length of the signals is the order of 100 msec and that the average interval between the signals is about 1 min long.

3. A process according to claim 1 or 2, characterized in that each of the signals is a double impulse.

4. Electricity meter for the process according to one of the claims 1, 2 or 3, with means to measure the electric energy drawn from the line and a filter used to identify the signals impressed onto the line, characterized by
- means to measure the interval between the signals,
- a computer used to value the electric energy drawn form the line between successive signals by thing into account the interval between the signals,
- a summing unit used to sum up the electric work weighted by the computer, and
- a display used to indicate this sum.

5. Indicating device used for the process according to claims 1 to 3, with means to measure and indicate the interval between the signals following to one another, characterized by a filter to recognize the signals impressed onto the power net, wherein the interval between the signals indicates the external value of the electric energy.

6. Indicating device according to claim 5, characterized in that the means to indicate the interval between the signals are colored LEDS of which at least one lights up depending on the interval between the signals.

7. Indicating device according to claim 7, characterized in that it is formed in the way of traffic lights.

8. Indicating device according to one of the claims 5, 6 or 7, characterized by the means to sand an acoustic signal as soon as the interval between the signals either falls below or exceeds an adjustable duration.

9. Switching device used for the process according to one the preceding claims, with means to switch on an electric device, means for arbitrarily adjusting a threshold value, means for comparing a signal value with the threshold value and means which switch an the electric device when the signal value falls below the threshold value and which switch off the electric device the signal value exceeds the threshold value, characterized by
- a filter for recognizing the signals impressed onto the power net, wherein the interval between the signals relates to the actual value of the electric energy, and
- means for forming the signal value from the actual interval between the signals impressed onto the net.

10. Switching device according to claim 9, characterized by means which guarantee a selectable minimum on-time and/or a selectable maximum off-time.

11. Switching device according to claim 9 or 10, to operate refrigerators and freezers or water heaters and room heaters, characterized by a thermostat which switches on the refrigerator or the heater whenever the temperature either falls below or exceeds a preadjusted temperature independent of the interval between the signals.

## Revendications

1. Procédé d'action sur la charge d'un réseau de distribution d'énergie électrique par application de signaux à celui-ci au moyen d'un émetteur de signaux de commande centralisée, dans lequel on fait varier l'intervalle de temps entre les signaux, caractérisé par le fait qu'on diminue l'intervalle de temps entre les signaux pour diminuer la charge du réseau et l'augmenter pour augmenter celle-ci.

2. Procédé selon la revendication 1, caractérise par le fait que la longueur des signaux est de l'ordre de 100 millisecondes et l'intervalle moyen entre les signaux de l'ordre de 1 minute.

3. Procédé selon l'une des revendications 1 et 2, caractérisé par le fait que chacun des signaux est un train d'impulsions doubles.

4. Compteur de courant pour le procède selon l'une des revendications 1 à 3, comportant des moyens de mesure de l'énergie électrique prise au réseau et un filtre pour la détection de signaux appliqués au réseau, caractérisé par
- des moyens de mesure de l'intervalle entre les signaux, qui indique la valeur instantanée de l'énergie électrique,
- un calculateur pour l'évaluation de l'énergie électrique prise au réseau entre des signaux successifs compte tenu de l'intervalle instantané entre les signaux,
- un sommateur pour la sommation de l'énergie électrique évaluée par le calculateur et
- un afficheur pour l'affichage de la somme.

5. Appareil indicateur pour le procédé selon l'une des revendications 1 à 3, comportant des moyens de détermination et d'indication de l'intervalle entre signaux successifs, caractérisé par un filtre pour la détection de signaux appliqués au réseau dont l'intervalle correspond à la valeur instantanée de l'énergie électrique.

6. Appareil indicateur selon la revendication 5, caractérisé par le fait que les moyens d'indication de l'intervalle entre les signaux sont des diodes électroluminescentes de couleur dont, chaque fois, au moins une s'allume en fonction de l'intervalle entre les signaux.

7. Appareil indicateur selon la revendication 6, caractérisé par un agencement du genre feux tricolores.

8. Appareil indicateur selon l'une des revendications 5 à 7, caractérisé par des moyens d'émission d'un signal acoustique dès que l'intervalle entre les signaux descend au-dessous d'une durée réglable ou dépasse une durée réglable.

9. Appareil de connexion pour le procédé selon l'une des revendications précédentes, comportant des moyens de mise en marche d'un appareil électrique, des moyens de réglage arbitraire d'un seuil, des moyens de comparaison d'une valeur de signal à ce seuil, et des moyens qui mettent l'appareil électrique en marche lorsque la valeur de signal descend au-dessous du seuil et l'arrêtent lorsque la valeur de signal dépasse le seuil, caractérisé par
- un filtre pour la détection de signaux appliqués au réseau dont l'intervalle correspond à la valeur instantanée de l'énergie électrique et
- des moyens d'établissement de la valeur de signal à partir de l'intervalle du moment entre les signaux appliqués au réseau.

10. Appareil de connexion selon la revendication 9, caractérisé par des moyens qui assurent une durée de marche minimale choisie et/ou une durée d'arrêt maximale choisie.

11. Appareil de connexion selon l'une des revendications 9 et 10 pour la conmande d'appareils de réfrigération et de congélation ou de chauffe-eau et d'appareils de chauffage des locaux, caractérisé par un thermostat qui met en marche l'appareil de refroidissement en cas de dépassement d'une température fixes et l'appareil de chauffage en cas de descente au-dessous d'une température fixée, indépendamment de l'intervale du moment entre les signaux.
